# EUROPÄISCHE PATENTSCHRIFT

(11) **EP 1 796 809 B1**
(45) Veröffentlichungstag und Bekanntmachung des Hinweises auf die Patenterteilung: **07.05.2008**
(21) Anmeldenummer: 06743008.2
(22) Anmeldetag: 20.05.2006
(51) Int. Cl.: B01D 29/21, B01D 35/30

(54) **ÖLFILTER**
OIL FILTER
FILTRE A HUILE

(30) Priorität: 25.08.2005 DE 102005041040; 02.09.2005 DE 102005042713
(43) Veröffentlichungstag der Anmeldung: 20.06.2007
(73) Patentinhaber: Joma-Polytec Kunststofftechnik GmbH, 72411 Bodelshausen (DE)
(72) Erfinder: JUNGMANN, Peter, 72414 Rangendingen (DE); MAUTE, Alexander, 72379 Hechingen-Stetten (DE); PFITZER, Friedhelm, 72414 Rangendingen (DE); MAIER, Jan, 72116 Mössingen (DE)
(74) Vertreter: Dreiss, Fuhlendorf, Steimle & Becker
(86) Internationale Anmeldenummer: PCT/EP2006/004806
(87) Internationale Veröffentlichungsnummer: WO 2007/022812

(56) Entgegenhaltungen:
- EP-A- 0 612 549
- EP-A- 1 093 840
- WO-A-01/39864
- DE-C1- 4 330 840
- DE-U1- 20 213 507
- DE-U1- 20 213 512
- US-A- 5 770 054

## Beschreibung

Die Erfindung betrifft eine Ölfilteranordnung mit einem Gehäuse, das einen Aufnahmeraum für ein in das Gehäuse einsetzbares, radial mit Öl durchströmbares Filterelement aufweist, und mit einem bei eingesetztem Filterelement das Filterelement tragenden Stützrohr.

Derartige Ölfilteranordnungen sind in vielfältiger Art und Weise bekannt. So sind beispielsweise Ölfilteranordnungen bekannt, bei denen das in axialer Richtung durchströmbare Stützrohr an einem den Aufnahmeraum verschließenden Deckel angeordnet ist. Eine solche Ausführungsform ist beispielsweise aus der DE 102 59 884 vorbekannt.

Die Anordnung des Stützrohrs am Deckel ist vergleichsweise aufwändig, da dann beim Auswechseln des Filterelements der Deckel samt Stützrohr zu entfernen ist. Zudem muss das Filterelement vom Stützrohr abgezogen werden.

Aus der EP 0 612 549 A bzw. der DE 43 30 840 C1 sind Ölfilteranordnungen bekannt geworden, bei denen ein Stützkörper bzw. ein Standrohr in den Aufnahmeraum eingesetzt und derart am Gehäuse verrastet bzw. eingeschraubt ist, dass er bzw. es beim Austausch des Filterelements im Gehäuse verbleibt.

Aus der WO 07/39864 A ist eine Ölfilteranordnungen bekannt geworden, bei der ein Stützdom mit einem am freien Ende des Stützrohrs angeordneten Kragen über ein gegen den Kragen wirkenden Stutzen eines separat zum Stützen ausgebildeten Haltebauteils im Aufnahmeraum des Filterelements gehalten wird. Das Haltebauteil, und nicht der Stützdom, ist dabei mittels Schrauben am Gehäuse festgeschraubt.

Der vorliegenden Erfindung liegt die Aufgabe zugrunde, eine Ölfilteranordnung bereitzustellen, die einen vergleichsweise einfachen Aufbau aufweist und bei der eine funktionssichere Anordnung des Stützrohrs gewährleistet wird.

Diese Aufgabe wird durch eine Ölfilteranordnung der eingangs genannten Art mit den Merkmalen des Anspruchs 1 gelöst.. Dadurch, dass das Stützrohr in den Aufnahmeraum eingesetzt und derart am Gehäuse befestigt ist, dass es beim Austausch des Filterelements im Gehäuse verbleibt, werden insbesondere bei der Fertigung der Ölfilteranordnung enorme Vorteile erzielt. Das Gehäuse kann als solches nach bekannter Art und Weise gefertigt werden. Insbesondere ist denkbar, das Gehäuse aus Kunststoff herzustellen. Dabei kann das zargenartig ausgebildete Stützrohr separat vom Gehäuse gefertigt werden und in das Gehäuse eingesetzt und daort befestigt werden. Hierdurch wird eine sichere Anordnung des Stützrohrs gewährleistet, bei der das Filterelement auf das Stützrohr aufgeschoben beziehungsweise vom Stützrohr abgezogen werden kann. Beim-Austausch des Filterelements verbleibt das Stützrohr im Gehäuse, wodurch die gesamte Handhabung vereinfacht wird.

Gemäß der Erfindung ist vorgesehen, dass das Gehäuse im Bereich des Bodens des Aufnahmeraums Befestigungsabschnitte aufweist und dass die dem Boden des Aufnahmeraums zugewandte Seite des Stützrohrs mit den Befestigungsabschnitten korrespondierende Befestigungsbereiche aufweist. Durch das Vorsehen der Befestigungsabschnitte im Bereich des Bodens des Aufnahmeraums, die insbesondere um die Mittellängsachse des Stützrohrs herum angeordnet sein können, kann eine sichere Anordnung des Stützrohrs erreicht werden, ohne dass hierdurch die radiale Durchströmbarkeit des Filterelements und des Stützrohrs beeinträchtigt wird.

Ferner ist vorgesehen, dass an den Befestigungsabschnitten beziehungsweise den Befestigungsbereichen Verbindungszapfen beziehungsweise mit den Verbindungszapfen korrespondierende Zapfenaussparungen vorgesehen sind. Über die Verbindungszapfen und die damit korrespondierenden Zapfenaussparungen kann auf einfache Art und Weise eine dauerhafte und unlösbare Anordnung des Stützrohrs am Gehäuse erreicht werden.

Die Verbindungszapfen sind dabei am Boden des Aufnahmeraums um die Mittellängsachse des Aufnahmeraums beziehungsweise des Stützrohrs herum verteilt angeordnet. Insbesondere können zwei, drei oder vier Verbindungszapfen vorgesehen sein, die in zugehörige, mit den Verbindungszapfen korrespondierende stützrohrseitige Zapfenaussparungen eingreifen. Die Anordnung der Verbindungszapfen beziehungsweise der Zapfenaussparungen um die Mittellängsachse des Stützrohrs beziehungsweise des Aufnahmeraums hat den Vorteil, dass im Stützrohr vorhandenes Öl entlang der Mittellängsachse in einen in diesen Bereich vorgesehenen Ölauslass fließen kann. Die Zapfen beziehungsweise Zapfenaussparungen behindern folglich dann ein Abfließen des Öls aus dem Stützrohr nicht. Die einzelnen Verbindungszapfen können dabei vorteilhafterweise zu den jeweils benachbarten Verbindungszapfen äquidistant angeordnet sein.

Um ein funktionssicheres Befestigen des Stützrohrs zu ermöglichen, sind die Befestigungsbereiche als in nach radial außen gewandter Richtung abstehende Füße oder als in nach radial außen gewandter Richtung abstehender und wenigstens abschnittsweise umlaufender Kragen ausgebildet. An den Füßen beziehungsweise am Kragen sind mit den Verbindungszapfen korrespondierende Zapfenaussparungen vorgesehen. Durch das Vorsehen der Füße beziehungsweise des Kragens können in Querrichtung auf das Stützrohr beziehungsweise auf das Stützrohr aufgesetzte Filterelement wirkende Kräfte vorteilhaft in das Gehäuse abgeleitet werden. Außerdem kann durch Vorsehen von derartigen Füßen oder Stegen erreicht werden, dass das Stützrohr zur Montage im Aufnahmeraum in axialer Richtung in diesen eingesetzt werden kann.

Dabei kann das Stützrohr insbesondere am Gehäuse verrastet, verschraubt und/oder bajonettartig und/oder unlösbar befestigt sein. Bei einer Verrastung sind entsprechende Rastmittel vorzusehen. Bei einer Verschraubung sind entsprechende Gewinde und/oder Schrauben vorzusehen. Bei einer bajonettartigen Befestigung wird das Stützrohr zunächst entlang seiner Längsachse in den Aufnahmeraum eingeführt und dann durch Verdrehen um seine Längsachse mittel entsprechend vorzusehenden Hinterscheidungsabschnitten festgesetzt.

Ferner können dabei die Verbindungszapfen beispielsweise als Nietzapfen, und insbesondere als Schweißnietzapfen ausgebildet sein. Nach dem Einsetzen des Stützrohrs können dann die Nietzapfen derart vernietet werden, dass eine unlösbare Verbindung des Stützrohrs mit dem Gehäuse stattfindet. Insbesondere dann, wenn das Gehäuse und auch das Stützrohr aus Kunststoff ist, bietet es sich an, die unlösbare Verbindung durch Heißnieten herzustellen.

Denkbar ist auch, dass die Verbindungszapfen als Schweiß- oder Heißnietzapfen derart ausgebildet sind, dass keine unlösbare Verbindung des Stützrohrs am Gehäuse stattfindet, sondern dass die Zapfenaussparungen bajonettartig ausgebildet sind. Dabei kann dann beispielsweise das Stützrohr in axialer Richtung in den Aufnahmeraum derart eingesetzt werden, dass die Verbindungszapfen in die Zapfenaussparungen eingreifen. In einem weiteren Schritt können die freien Enden der Verbindungszapfen heißgenietet werden. Soll dann zu einem späteren Zeitpunkt das Stützrohr wieder aus dem Aufnahmeraum herausgenommen werden, kann dieses um seine Mittellängsachse so weit verdreht werden, bis die Nietköpfe in die Bereiche der Zapfenaussparungen gelangen, die eine lichte Querschnittsfläche aufweisen, die größer ist als der Durchmesser der Heißnietköpfe. Das Stützrohr kann dann in axialer Richtung aus dem Aufnahmeraum herausgenommen werden. Anstelle von heißgenieteten Verbindungszapfen können auch Verbindungszapfen in Form von Schrauben Verwendung finden, die einen die Aufweitung bildenden Schraubenkopf aufweisen.

Erfindungsgemäß kann allerdings auch vorgesehen sein, dass die Verbindungszapfen als Rastzapfen ausgebildet sind. Durch ein Verrasten, und insbesondere durch ein unlösbares Hinterrasten der Rastzapfen mit den Zapfenaussparungen, kann ebenfalls erreicht werden, dass das Stützrohr erfindungsgemäß am Gehäuse befestigt wird.

Gemäß der Erfindung kann das Stützrohr auch mittels Schraubverbindungen am Gehäuse befestigt sein.

Eine bevorzugte Ausführungsform der Erfindung ergibt sich dann, wenn die Befestigungsabschnitte des Gehäuses als in axialer und/oder radialer Richtung verlaufende Stege ausgebildet sind, an deren dem Filterelement zugewandten Oberseiten jeweils wenigstens ein Verbindungszapfen angeordnet ist. Die Stege erstrecken sich dabei vorteilhafterweise vom Boden des Aufnahmeraums in axialer Richtung nach oben und bilden eine Anlage für das Stützrohr. Beim Einsetzen des Stützrohrs liegt dieses folglich an der Oberseite der Stege an. Bei Vorsehen von Nietzapfen kann eine Nietverbindung zwischen den Stegen und dem Stützrohr realisiert werden. Ein Vernieten kann hierbei vorteilhafterweise in axialer Richtung von oben erfolgen. Die Stege können sich dabei in radialer Richtung wenigstens abschnittsweise über den Boden des Aufnahmeraums erstrecken. Hierdurch kann die Steifigkeit des Gehäuses erhöht werden.

Gemäß einer weiteren vorteilhaften Ausgestaltung der Erfindung kann vorgesehen sein, dass die Verbindungszapfen derart in die Verbindungsbereiche eingreifen, dass das Stützrohr von einer bei geschlossenem Aufnahmeraum eingenommenen Betriebslage in eine bei geöffnetem Aufnahmeraum einnehmbare Ablasslage in axialer Richtung verlagerbar ist, wobei in der Ablasslage insbesondere ungefiltertes Öl aus dem Aufnahmeraum abfließen kann. Hierdurch wird erreicht, dass beim Wechsel des Filterelements die Verbindungszapfen mit dem zugehörigen Befestigungsbereichen zwar ein Herausnehmen des Stützrohrs verhindern, aber dennoch eine gewisse Beweglichkeit des Stützrohrs in axialer Richtung ermöglichen. Das Stützrohr kann folglich in die Ablasslage verlagert werden, in der im Aufnahmeraum vorhandenes Öl abfließen kann, bevor das Filterelement vollständig aus dem Aufnahmeraum entfernt wird. Dadurch kann nach Öffnen des Aufnahmeraums und nach Verlagern des Stützrohrs in die Ablasslage so lange gewartet werden, bis das im Aufnahmeraum vorhandene Öl so weit aus dem Aufnahmeraum abgeflossen ist, bis ein Herausnehmen des Filterelements ohne größere Ölverluste möglich wird.

Dazu können die Verbindungszapfen im Bereich ihrer freien Enden eine pilzkopfartige Aufweitung, beispielsweise in Form eines Heißnietkopfes, aufweisen, wobei der Abstand vom Boden des Aufnahmeraums zur Unterkante der Aufweitung wenigstens geringfügig größer ist als die sich in axialer Richtung erstreckende Dicke der Befestigungsbereiche. Hierdurch wird ein gewisses Spiel erreicht, das eine bedingte Verlagerung des Stützrohrs in axialer Richtung ermöglicht.

Vorteilhafterweise kann zwischen dem Boden des Aufnahmeraums und den Befestigungsbereichen ein das Stützrohr weg vom Boden beaufschlagendes Federelement vorgesehen sein. Hierdurch wird ein selbsttätiges Verlagern des Stützrohrs weg vom Boden beim Öffnen des Aufnahmeraums, beispielsweise beim Abschrauben eines den Aufnahmeraum verschließenden Deckels, erreicht.

Das Stützrohr kann dabei auf der dem Filterelement abgewandten Seite in einen Ölauslass derart eingreifen, dass in der Betriebslage über das Stützrohr kein ungefiltertes Öl in den Ölauslass einfließen kann und in der Ablasslage eine am Stützrohr vorgesehene Ablassaussparung mit dem Aufnahmeraum korrespondiert und ungefiltertes Öl über die Ablassaussparung in den Ölauslass einfließen kann. In der Betriebslage korrespondiert folglich die Ablassaussparung nicht mit dem Aufnahmeraum; erst bei Verlagern des Stützrohrs in die Ablasslage gelangt die Ablassaussparung in den Bereich des Aufnahmeraums derart, dass Öl über die Ablassaussparung abfließen kann. Da die Ablassaussparung in der Ablasslage in dem Aufnahmeraum im Bereich dessen Bodens korrespondiert, wird gewährleistet, dass im Aufnahmeraum vorhandenes Öl weitestgehend über die Ablassaussparung und den Ölsauslass abfließen kann.

Vorteilhafterweise fließt über den Ölauslass in der Betriebslage das durch das Filterelement hindurchströmende, gefilterte Reinöl aus der Ölfilteranordnung ab. Der Ölauslass hat folglich zwei Funktionen: In der Betriebslage fließt über ihn Reinöl aus der Ölfilteranordnung und in der Ablasslage fließt über ihn insbesondere ungefiltertes Rohöl aus der Ölfilteranordnung. Eine vorteilhafte Ausführungsform der Erfindung kann vorsehen, dass das Stützrohr im Bereich des Bodens des Aufnahmeraums ein in radialer Richtung geschlossenes zum Stützrohr radial beabstandetes Staurohr umgibt. Beim Einsetzen des Stützrohrs kann dieses beispielsweise auf das Staurohr aufgesetzt werden. Das Staurohr dient dann als Fügehilfe.

Gemäß einer Weiterbildung der Erfindung kann ferner vorgesehen sein, dass an der dem Boden des Aufnahmeraums abgewandten freien Seite des Stützrohrs ein Überdruck-Umgehungs-Ventil angeordnet ist. Ein derartiges Ventil öffnet dann, wenn ein Grenzdruck überschritten wird, beispielsweise aufgrund eines sich mit Verschmutzungen zusetzenden Filterelements.

Erfindungsgemäß kann vorgesehen sein, dass am Boden des Aufnahmeraums eine Ablassöffnung und in der Ablassöffnung ein Ablassventil vorgesehen ist. Das Ablassventil ist dabei bei eingesetztem Filterelement in Schließstellung, wobei insbesondere am Stützrohr, und insbesondere am Kragen oder an einem Fuß des Stützrohrs, eine Führung für einen Ausgleichskörper des Ablassventils vorgesehen ist. Die Führung führt den Ausgleichskörper in axialer Richtung, wobei auf den Ausgleichskörper in Querrichtung wirkende Kräfte über die Führung in das Gehäuse ableitbar sind. Anstelle des Stützrohrs kann zur Führung des Ausgleichskörpers kann auch ein anderes geeignetes, am Gehäuse angeordnetes Bauteil Verwendung finden.

Der Ausgleichskörper dient dabei zum Ausgleich von axialen Toleranzen des Gehäuses und/oder des Filterelements. Dazu sollte er in axialer Richtung über den Boden des Aufnahmeraums überstehen. Ferner ist er gegen in Querrichtung auftretende Kräfte zu sichern, da beim Aufschrauben eines den Aufnahmeraum verschließenden Deckels nicht auszuschließen ist, dass das Filterelement von der Drehbewegung des Deckels mitgenommen wird. Dies wird durch die entsprechende Führung des Ausgleichskörpers erreicht.

Aus der DE 44 08 888 C2 ist in diesem Zusammenhang bekannt geworden, den Ausgleichskörper (der dort Betätigungskörper genannt wird) mit seinem Außenumfang an der Wandung des Ablasskanals zu führen. Auftretende Querkräfte werden folglich in die Wandung des Ablasskanals abgeleitet. Aufgrund der Anordnung des Ablassventils im Ablasskanal können sich bei diesem Stand der Technik dort allerdings Verschmutzungen und Verunreinigungen ansammeln, was die Funktionsfähigkeit des Ausgleichskörpers und des gesamten Ablassventils negativ beeinträchtigen kann. Dadurch, dass gemäß dieser Ausgestaltung der Erfindung insbesondere das Stützrohr den Ausgleichskörper führt, kann dies außerhalb des Ablasskanals und insbesondere oberhalb des Bodens des Aufnahmeraums erfolgen. Dies hat den Vorteil, dass der Ausgleichskörper von im Aufnahmeraum vorhandenen Öl durchspült wird und sich dadurch keine Verschmutzungen oder Ablagerungen am Ausgleichskörper störend ansammeln können. Zudem wird der Ausgleichskörper sicher gegen eine Auslenkung aufgrund von Querkräften geschützt.

Dabei kann ferner vorgesehen sein, dass die axiale Bewegbarkeit des Ausgleichskörpers durch die Führung am Stützrohr begrenzt wird. Die Führung dient dann zusätzlich als Verliersicherung für den Ausgleichskörper in axialer Richtung.

Gemäß einer vorteilhaften Ausgestaltung der Erfindung ist die Führung für den Ausgleichskörper als Durchbruch am Fuß oder am Kragen des Stützrohrs ausgebildet. Insbesondere kann es sich hierbei um einen geschlossenen Kreisdurchbruch handeln, dessen Innendurchmesser geringfügig größer ist als die Außenmaße des Ausgleichskörpers.

Erfindungsgemäß kann ferner vorgesehen sein, dass das Ablassventil einen zwischen einer Schließstellung und einer Öffnungsstellung beweglich verlagerbaren Ventilkörper umfasst, der bei eingesetztem Filterelement von einem ersten Federelement in die Schließstellung beaufschlagt wird und von einem zweiten, gegenüber dem ersten Federelement schwächer ausgebildeten Federelement in Öffnungsstellung beaufschlagt wird, wobei der Ausgleichskörper am Ventilkörper axial verlagerbar angeordnet ist und bei eingesetztem Filterelement vom ersten Federelement gegen das Filterelement beaufschlagt wird. Eine derartige Anordnung hat sich als besonders geeignet und funktionssicher herausgestellt.

Weitere Einzelheiten und vorteilhafte Ausgestaltungen der Erfindung sind der folgenden Beschreibung zu entnehmen, mit der die in der Zeichnung dargestellte Ausführungsform näher beschrieben und erläutert wird.

Es zeigen:
- Figur 1: einen Längsschnitt durch eine erste erfindungsgemäße Ölfilteranordnung;
- Figur 2: eine Draufsicht gemäß dem Pfeil II in Figur 1;
- Figur 3: einen Teilschnitt entlang der Linie III in Figur 2;
- Figur 4 Figur 5: eine Vergrößerung des Bereichs IV in Figur 1; einen Längsschnitt durch eine zweite erfindungsgemäße Ölfilteranordnung;
- Figur 6: einen Figur 5 ähnlichen Schnitt aus einer anderen Perspektive ohne Filterelement; und
- Figur 7: das in den Figuren 5 und 6 gezeigte Stützrohr in Einzelteildarstellung.

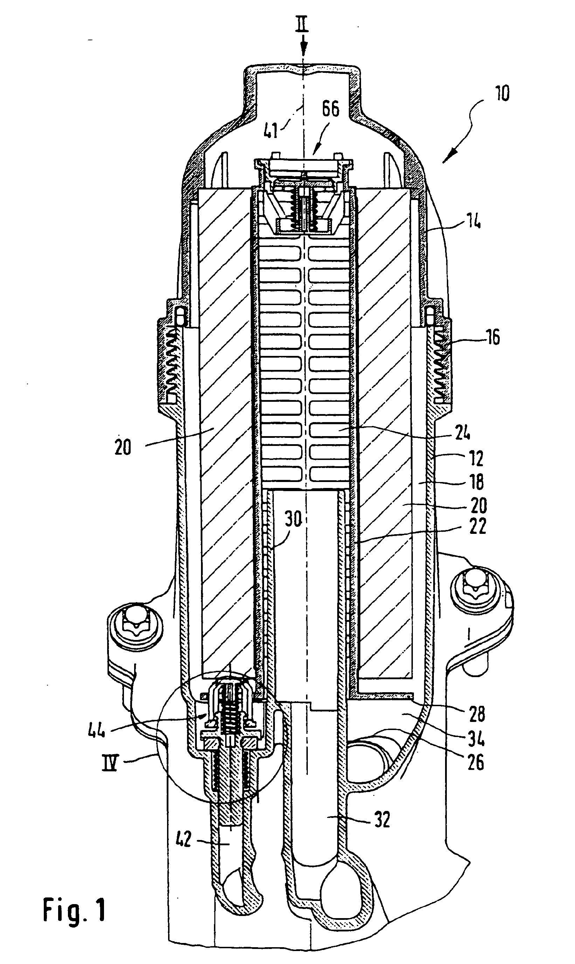

Die in der Figur 1 dargestellte Ölfilteranordnung 10 umfasst ein Gehäuse 12, das mit einem Deckel 14 über ein Gewinde 16 verschraubbar ist. Das Gehäuse 12 und der Deckel 14 umschließen einen Aufnahmeraum 18, in dem ein radial mit Öl durchströmbares Filterelement 20 angeordnet ist. Das Filterelement 20 wird dabei von einem zargenartigen Stützrohr 22 getragen. Zur radialen Durchströmung des Stützrohres 22 mit Öl sind am Stützrohr eine Vielzahl von Durchbrüchen 24 vorgesehen. Das Stützrohr 22 weist an seinem dem Boden 26 des Aufnahmeraums zugewandten Seite einen nach radial außen gerichteten, umlaufenden Ringkragen 28 auf. Anstelle des Vorsehens eines umlaufenden Ringkragens ist erfindungsgemäß ebenfalls denkbar, lediglich Ringkragenabschnitte oder Füße vorzusehen, die sich in radial außen gewandter Richtung erstrecken.

Das Stützrohr 22 umgibt im unteren Bereich ein am Boden 26 des Aufnahmeraums angeordnetes, sich in axialer Richtung nach oben erstreckendes und in radialer Richtung geschlossenes Staurohr 30. Das Staurohr 30 mündet in einem Ölauslass 32 für gefiltertes Reinöl. Ein Öleinlass 34 für zu filterndes Rohöl befindet sich im Bereich des Bodens 26 des Aufnahmeraums 18.

Im Betrieb der Ölfilteranordnung strömt zu filterndes Rohöl vom Öleinlass 34 radial durch das Filterelement 20 hin zum Ölauslass 32.

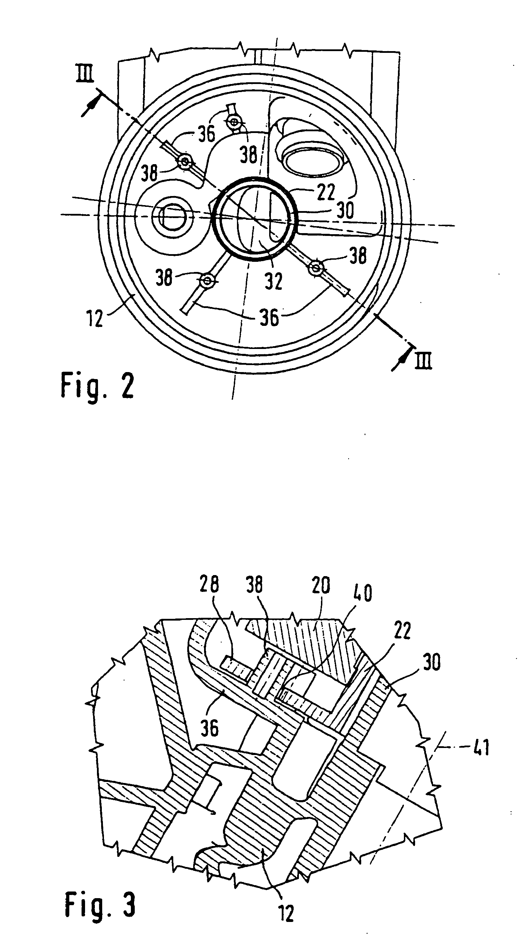

Das Stützrohr 22 ist in axialer Richtung von oben in den Aufnahmeraum 18 eingesetzt und ist dort unlösbar befestigt. Dazu sind im Bereich des Bodens 26 in der Ansicht nach Figur 2, die die Draufsicht auf dem Boden 26 zeigt, Befestigungsabschnitte 36 vorgesehen. Ein derartiger Befestigungsabschnitt 36 ist in der Figur 3 im Schnitt vergrößert dargestellt. In Figur 3 ist deutlich zu erkennen, dass an der dem Filterelement 20 zugewandten Oberseite der stegartigen Befestigungsabschnitte 36 ein Verbindungszapfen 38 angeordnet ist, der als Schweißhohlnietzapfen im unvernieteten Zustand dargestellt ist. Der Zapfen 38 greift dabei in eine mit ihm korrespondierende, am Kragen 28 des Stützrohrs 22 vorgesehene Zapfenaussparung 40. Zur unlösbaren und dauerhaften Befestigung des Stützrohrs 22 werden die Verbindungszapfen mittels Heißnieten plastisch verformt. Das Stützrohr 22 sowie das Gehäuse 12 sind dabei aus Kunststoff hergestellt. Anstelle des Heißnietens kann auch vorgesehen sein, dass die Zapfen Innen- oder Außengewinde aufweisen, so dass der Kragen 28 über Schrauben oder Muttern am Gehäuse verschraubt werden kann. Bei nicht eingesetztem Filterelement 20 sind die Verbindungszapfen 38 von axial oben zugänglich.

Wie insbesondere aus der Figur 3 deutlich wird, verläuft die Oberseite der Befestigungsabschnitte 36 parallel zum Kragen 28 beziehungsweise senkrecht zur Mittellängsachse 41 des Gehäuses 12. Hierdurch ergibt sich zwischen den Befestigungsabschnitten 36 und dem Kragen 28 eine optimale Anlagefläche. Beim Einführen des Stützrohrs 22 kann dieses soweit auf das Staurohr 30 aufgesteckt werden, bis der Kragen 28 an den Befestigungsabschnitten zum Anliegen kommt.

Wie in der Figur 1 gezeigt ist, ist am Boden 26 des Gehäuses 12 eine Ablassöffnung 42 vorgesehen, in der ein Ablassventil 44 angeordnet ist. Bei eingesetztem Filterelement 20 ist das Ablassventil 44 in Schließstellung.

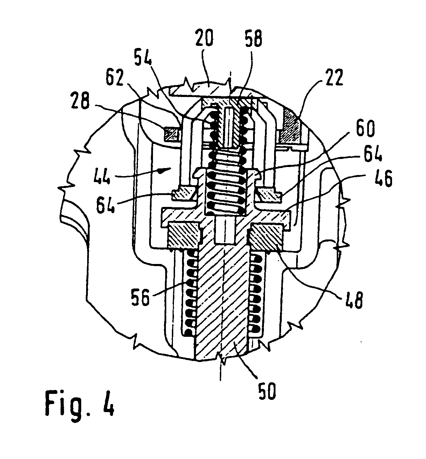

Aus der Vergrößerung gemäß Figur 4 wird deutlich, dass das Ablassventil 44 einen zwischen einer Schließstellung und einer Öffnungsstellung beweglich verlagerbaren Ventilkörper 46 aufweist, an dem ein ringartiges Dichtelement 48 angeordnet ist. Der Ventilkörper 46 weist einen sich in axialer Richtung erstreckenden Führungszapfen 50 auf, der mit einem Führungsabschnitt 52 der Ablassöffnung 42 zusammenwirkt. Der Führungszapfen 50 kann dabei beispielsweise im Querschnitt kreuzrippenartig ausgebildet sein, so dass Öl entlang des Führungszapfens in die Ablassöffnung 42, beziehungsweise in einen Ablasskanal fließen kann.

Ober ein erstes Federelement 54 wird der Ventilkörper 46 in seine Schließstellung beaufschlagt. Über ein zweites Federelement 56, das schwächer ausgebildet ist als das erste Federelement 54, wird der Ventilkörper 46 in Öffnungsstellung beaufschlagt. Zwischen dem Federelement 54 und dem Filterelement 20 ist ein Ausgleichskörper 58 vorgesehen, der am Ventilkörper 46 axial verlagerbar angeordnet ist. Der Ausgleichskörper dient dabei zum Ausgleich von axialen Toleranzen des Gehäuses und/oder des Filterelements.

Bei eingesetztem Filterelement wird der Ventilkörper 46 über den Ausgleichskörper 58 und das stärkere Federelement 54 in Schließrichtung beaufschlagt. Beim Herausnehmen des Filterelements 20 bewegt sich zunächst der Ausgleichskörper 58 nach axial oben, bis dieser auf einen Anschlag 60 am Ausgleichskörper 58 trifft. Aufgrund der Federkraft des Federelements 56 bewegt sich dann der Ventilkörper 46 nach axial oben, wodurch die Ablassöffnung 42 geöffnet wird und im Gehäuse 12 vorhandenes Öl über die Ablassöffnung 42 abfließen kann. Der Ausgleichskörper 58 ist dabei käfigartig ausgebildet, so dass er von Öl durchströmt werden kann.

Wie aus der Figur 4 deutlich wird, weist der Kragen 28 im Bereich des Ausgleichselements 58 eine Führung 62 in Form eines Durchbruchs auf. Die Führung 62 führt dabei den Ausgleichskörper 58 in axialer Richtung und verhindert ein Auslenken des Ausgleichskörpers in Querrichtung. Zudem dient die Führung 62 als Anschlag für am Ausgleichskörper 58 nach radial außen gerichtete Rückhalteabschnitte 64, deren radiales Außenmaß geringfügig größer ist als der Durchmesser der Führung 62. Dadurch wird der Ausgleichskörper 58 verliersicher im Gehäuse 12 angeordnet. Bei entnommenem Filterelement kann der Ausgleichskörper 58 folglich nicht in axialer Richtung nach oben entnommen werden.

Durch die unlösbare Befestigung des Stützrohrs 22 wird folglich auch das Ablassventil 44 dauerhaft und verliersicher in der Ablassöffnung 42 angeordnet.

Wie aus der Figur 1 deutlich wird, ist am freien, dem Boden 26 abgewandten Ende des Stützrohrs 22 ein Oberdruck-Umgehungs-Ventil 66 angeordnet. Das Überdruck-Ventil 66 öffnet bei Überschreiten eines Grenzdrucks, so dass ungefiltertes Öl aus dem Aufnahmeraum 18 über das Staurohr 30 zum Ölauslass 32 gelangen kann.

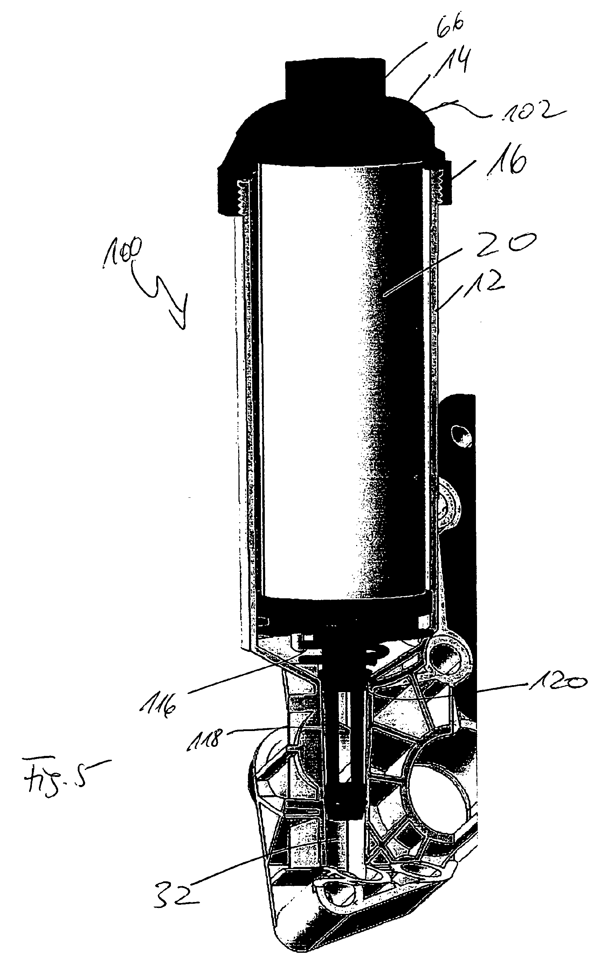

In den Figuren 5 bis 7 ist eine zweite erfindungsgemäße Ölfilteranordnung 100 gezeigt, wobei der Ölfilteranordnung 10 gemäß den Figuren 1 bis 4 entsprechende Bauteile mit entsprechenden Bezugszeichen versehen sind.

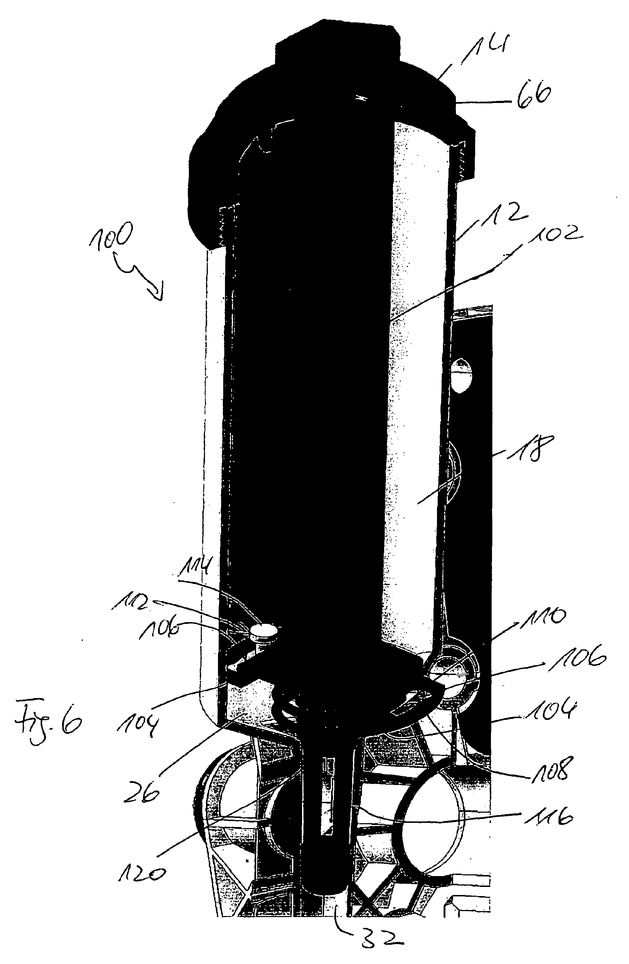

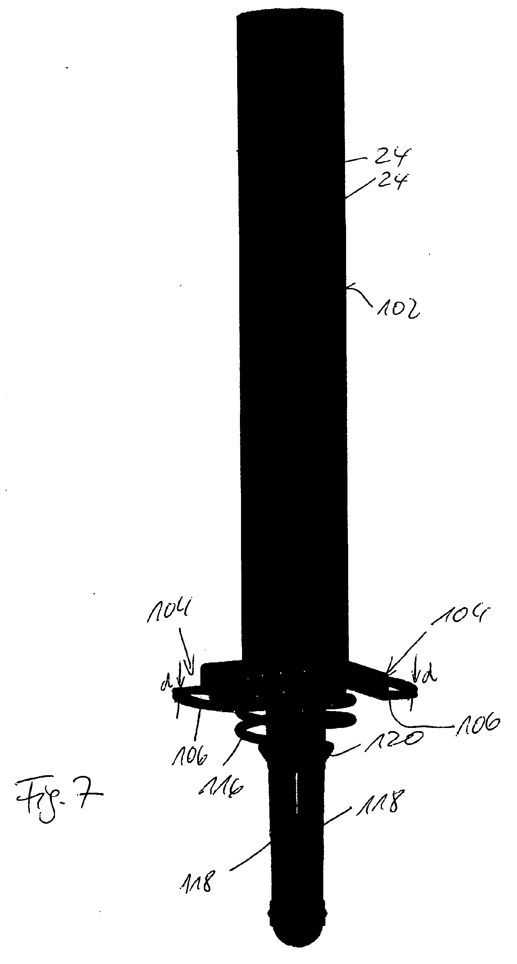

Bei der Ölfilteranordnung 100 sind, wie aus Figur 6 und 7 deutlich wird, am Stützrohr 102 Befestigungsabschnitte in Form von in nach radial außen gewandter Richtung abstehende Füße 104 vorgesehen. In den Füßen sind bajonettförmige Zapfenaussparungen 106 vorgesehen, die einen um die Mittellängsachse des Stützrohrs 102 herum verlaufenden Ringsegmentabschnitt 108 und einen sich an den Ringsegmentabschnitt 108 anschließenden Kreisringabschnitt 110 aufweisen.

Wie insbesondere aus Figur 6 deutlich wird, sind am Boden 26 des Aufnahmeraums 18 Verbindungszapfen 112 vorgesehen, die an ihrem freien Ende eine pilzkopfartige Aufweitung 114 aufweisen. Der Durchmesser der pilzkopfartigen Aufweitung 114 ist dabei jeweils wenigstens geringfügig kleiner als die lichte Fläche des Kreisringabschnitts 110 und größer als die Breite des jeweiligen Ringsegmentabschnitts 108. Hierdurch kann das Stützrohr 102 bajonettartig im Aufnahmeraum 18 verbleibend angeordnet werden.

Die Verbindungszapfen 112 können beispielsweise aus Kunststoff sein, wobei die Verbindungszapfen 112 zunächst zylindrisch ausgebildet sein können und erst nach Einsetzen des Stürzrohrs 102 durch beispielsweise Heißvernieten die pilzkopfartige Aufweitung 114 erhalten können. Erfindungsgemäß kann ebenfalls vorgesehen sein, dass die Verbindungszapfen 112 beispielsweise durch in das Gehäuse einschraubbare, entsprechende Schraubköpfe aufweisende, Schrauben realisiert sein können.

Bei der Ölfilteranordnung 100 gemäß den Figuren 5 bis 7 ist der Abstand vom Boden 26 des Aufnahmeraums 18 zur Unterkante der Aufweitung 114 cirka zwei bis zehnmal Mal und insbesondere cirka 5 mal so groß wie die sich in axialer Richtung erstreckenden Dicke d der beiden Füße 104. Hierdurch wird erreicht, dass eine bedingte Bewegung des Stützrohrs 102 in axialer Richtung ermöglicht wird. Dazu ist das Stützrohr 102 von einer bei geschlossenem Aufnahmeraum 18 eingenommenen Betriebslage in eine bei geöffnetem Aufnahmeraum 18, beziehungsweise bei entnommenem Deckel 14, einnehmbare Ablasslage in axialer Richtung verlagerbar. Zur selbsttätigen Verlagerung des Stützrohrs 102 aus der Betriebslage in die Ablasslage ist ein Federelement 116 vorgesehen, dass sich einerseits am Boden 26 des Aufnahmeraums 18 und andererseits am Stützrohr 102 beziehungsweise auf der dem Boden 26 zugewandten Seite der Füße 104 abstützt.

Wie aus den Figuren 5 und 6 deutlich wird, greift das Stützrohr 102 auf der dem Filterelement 20 beziehungsweise dem Deckel 14 abgewandten Seite in den Ölauslass 32 ein. In dem Abschnitt des Stützrohrs 102, der in den Figuren 5 und 6 gezeigten Betriebslage vollständig im Ölauslass 32 angeordnet ist, sieht das Stützrohr 102 Ablassaussparungen 118 vor. Auf der den Füßen 104 zugewandten Seite schließt sich an die Ablassaussparungen 118 ein umlaufender Dichtbund 120 an. In der in den Figuren gezeigten Betriebslage wirkt der Dichtbund 120 dichtend gegen einen mit dem Dichtbund 120 korrespondierenden Gehäuseabschnitt im Übergangsbereich vom Aufnahmeraum 18 zum Ölauslass 32. In der Betriebslage fließt das das Filterelement 20 in radialer Richtung durchströmende, gefilterte Reinöl über den Ölauslass 32 aus der Ölfilteranordnung 100 zum Verbraucher.

Beim Öffnen des Gehäusedeckels 14 wird das Stützrohr 102 aufgrund des Federelements 116 nach axial oben so weit verlagert, bis die Füße 104 an der Unterseite der Aufweitungen 114 zum Anliegen kommen. In dieser Ablasslage korrespondieren dann die Ablassaussparungen 118 mit dem Aufnahmeraum 18 derart, dass im Aufnahmeraum 18 vorhandenes Öl über die Ablassaussparungen 118 in die Ablassöffnung 42 einfließen kann.

Das Stützrohr 102 weist in dem Bereich, in dem es mit dem Filterelement 20 zusammenwirkt, in der Figur 7 angedeutete Durchbrüche 24 auf.

## Patentansprüche

1. Ölfilteranordnung (10, 100) mit einem Gehäuse (12), das einen Aufnahmeraum (18) für ein in das Gehäuse (12) einsetzbares, radial mit Öl durchströmbares Filterelement (20) aufweist, und mit einem bei eingesetztem Filterelement (20) das Filterelement (20) tragenden Stützrohr (22, 102), das in den Aufnahmeraum (18) eingesetzt und derart am Gehäuse (12) befestigt ist, dass es beim Austausch des Filterelements (20) im Gehäuse (12) verbleibt, **dadurch gekennzeichnet,**
**dass** das Gehäuse (12) im Bereich des Bodens (26) des Aufnahmeraums, um die Mittellängsachse (41) des Aufnahmeraums (18) und/oder des Stützrohrs (22, 102) herum angeordnete, Verbindungszapfen (38, 112) vorsehende Befestigungsabschnitte (36) aufweist und dass die dem Boden (26) des Aufnahmeraums (18) zugewandte Seite des Stützrohres (22, 102) mit den Verbindungszapfen (38, 112) korrespondierende, Zapfenaussparungen (40, 106) vorsehende Befestigungsbereiche (22), die als in nach radial außen gewandter Richtung abstehende Füße oder als in nach radial außen gewandter Richtung abstehender und wenigstens abschnittsweise umlaufender Kragen ausgebildet sind, aufweist.

2. Ölfilteranordnung (10, 100) nach Anspruch 1, **dadurch gekennzeichnet, dass** das Stützrohr (22, 102) am Gehäuse (12) verrastet, verschraubt und/oder bajonettartig und/oder unlösbar befestigt ist.

3. Ölfilteranordnung (10, 100) nach Anspruch 1 oder 2, **dadurch gekennzeichnet, dass** die Verbindungszapfen (38, 112) als Nietzapfen, und insbesondere als Heißnietzapfen, ausgebildet sind.

4. Ölfilteranordnung (10, 100) nach Anspruch 1 oder 2, **dadurch gekennzeichnet, dass** die Verbindungszapfen (38, 112) als Rastzapfen ausgebildet sind.

5. Ölfilteranordnung (10, 100) nach Anspruch 1 oder 2, **dadurch gekennzeichnet, dass** die Befestigungsabschnitte Gewinde für die Befestigungsbereiche durchgreifende Befestigungsschrauben aufweisen.

6. Ölfilteranordnung (10, 100) nach Anspruch 5, **dadurch gekennzeichnet, dass** die Verbindungszapfen ein Innen- oder Außengewinde für die Befestigungsschrauben aufweisen.

7. Ölfilteranordnung (10, 100) nach einem der vorhergehenden Ansprüche, **dadurch gekennzeichnet, dass** die Befestigungsabschnitte (36) des Gehäuses als in axialer und/oder radialer Richtung verlaufende Stege ausgebildet sind, an deren dem Filterelement zugewandten Oberseiten jeweils wenigstens ein Verbindungszapfen (38, 112) angeordnet ist.

8. Ölfilteranordnung (100) nach wenigstens der vorhergehenden Ansprüche, **dadurch gekennzeichnet, dass** die Verbindungszapfen (112)derart in die Befestigungsbereiche (104) eingreifen, dass das Stützrohr (102) von einer bei geschlossenem Aufnahmeraum (18) eingenommenen Betriebslage in eine bei geöffnetem Aufnahmeraum (18) einnehmbare Ablasslage in axialer Richtung verlagerbar ist, wobei in der Ablasslage Öl aus dem Aufnahmeraum (18) abfließen kann.

9. Ölfilteranordnung (100) nach Anspruch 8, **dadurch gekennzeichnet, dass** die Verbindungszapfen (112) im Bereich ihrer freien Enden eine pilzkopfartige Aufweitung (114) aufweisen, wobei der Abstand vom Boden (26) des Aufnahmeraums (18) zur Unterkante der Aufweitung (114) wenigstens geringfügig größer ist als die sich in axialer Richtung erstreckende Dicke der Befestigungsbereiche (104).

10. Ölfilteranordnung (100) nach Anspruch 8 oder 9, **dadurch gekennzeichnet, dass** zwischen dem Boden (26) des Aufnahmeraums (18) und den Befestigungsbereichen ein das Stützrohr (102) weg vom Boden beaufschlagendes Federelement (116) vorgesehen ist.

11. Ölfilteranordnung (100) nach Anspruch 8, 9 oder 10, **dadurch gekennzeichnet, dass** das Stützrohr (102) auf der dem Filterelement (20) abgewandten Seite in einen Ölauslass (32) derart eingreift, dass in der Betriebslage über das Stützrohr (102) kein ungefiltertes Öl in den Ölauslass (32) einfließen kann und in der Ablasslage eine am Stützrohr (102) vorgesehene Ablassaussparung (118) mit dem Aufnahmeraum (18) korrespondiert und insbesondere ungefiltertes Öl über die Ablassaussparung (118) in den Ölauslass (32) einließen kann.

12. Ölfilteranordnung (100) nach wenigstens einem der Ansprüche 8 bis 11, **dadurch gekennzeichnet, dass** in der Betriebslage durch das Filterelement (20) hindurchströmendes, gefiltertes Reinöl über den Ölauslass (32) aus dem Aufnahmeraum abfließt.

13. Ölfilteranordnung (10) nach einem der vorhergehenden Ansprüche 1 bis 12, **dadurch gekennzeichnet, dass** das Stützrohr (22) im Bereich des Bodens (26) des Aufnahmeraums (18) ein in radialer Richtung geschlossenes, zum Stützrohr (22) radial beabstandetes Staurohr (30) umgibt.

## Claims

1. Oil filter arrangement (10, 100) comprising a housing (12) which has a receptacle (18) for a filter element (20) which can be inserted into the housing (12) and through which oil flows radially, and comprising a support tube (22, 102) which supports the filter element (20) when the filter element (20) is inserted and which is inserted into the receptacle (18) and is fixed to the housing (12) in such a way that it remains in the housing (12) on replacement of the filter element (20), **characterized in that** the housing (12) has, in the region of the bottom (26) of the receptacle, fixing sections (36) which are arranged around the central longitudinal axis (41) of the receptacle (18) and/of the support tube (22, 102) and provide connecting pegs (38, 112) and **in that** that side of the support tube (22, 102) which faces the bottom (26) of the receptacle (18) has fixing regions (22) which correspond to the connecting pegs (38, 112), provide peg recesses (40, 106) and are in the form of feet projecting in a direction facing radially outwards or in the form of a collar which projects in a direction facing radially outwards and runs around at least in sections.

2. Oil filter arrangement (10, 100) according to Claim 1, **characterized in that** the support tube (22, 102) is locked, screwed and/or fixed in a bayonet-like and/or non-detachable manner on the housing (12).

3. Oil filter arrangement (10, 100) according to Claim 1 or 2, **characterized in that** the connecting pegs (38, 112) are in the form of rivet shanks and in particular in the form of hot rivet shanks.

4. Oil filter arrangement (10, 100) according to Claim 1 or 2, **characterized in that** the connecting pegs (38, 112) are in the form of locking pegs.

5. Oil filter arrangement (10, 100) according to Claim 1 or 2, **characterized in that** the fixing sections have threads for the fixing screws passing through the fixing regions.

6. Oil filter arrangement (10, 100) according to Claim 5, **characterized in that** the connecting pegs have an internal or external thread for the fixing screws.

7. Oil filter arrangement (10, 100) according to any of the preceding claims, **characterized in that** the fixing sections (36) of the housing are in the form of webs which run in the axial and/or radial direction and on whose upper surfaces facing the filter element in each case at least one connecting peg (38, 112) is arranged.

8. Oil filter arrangement (100) according to at least one of the preceding Claims, **characterized in that** the connecting pegs (112) engage the fixing regions (104) in such a way that the support tube (102) can be displaced in the axial direction from an operating position assumed when the receptacle (18) is closed to a discharge position which can be assumed when the receptacle (18) is opened, it being possible for oil to flow out of the receptacle (18) in the discharge position.

9. Oil filter arrangement (100) according to Claim 8, **characterized in that** the connecting pegs (112) have a mushroom head-like expansion (114) in the region of their free ends, the distance from the bottom (26) of the receptacle (18) to the lower edge of the expansion (114) being at least slightly larger than the thickness of the fixing regions (104) in the axial direction.

10. Oil filter arrangement (100) according to Claim 8 or 9, **characterized in that** a spring element (116) which presses the support tube (102) away from the bottom is provided between the bottom (26) of the receptacle (18) and the fixing regions.

11. Oil filter arrangement (100) according to Claim 8, 9 or 10, **characterized in that** the support tube (102) engages an oil outlet (32) on the side facing away from the filter element (20) in such a way that, in the operating position, no unfiltered oil can flow via the support tube (102) into the oil outlet and, in the discharge position, a discharge recess (118) provided on the support tube (102) corresponds to the receptacle (18) and in particular unfiltered oil can flow via the discharge recess (118) into the oil outlet (32).

12. Oil filter arrangement (100) according to at least one of Claims 8 to 11, **characterized in that**, in the operating position, filtered pure oil flowing through the filter element (20) flows out of the receptacle via the oil outlet (32).

13. Oil filter arrangement (10) according to any of the preceding Claims 1 to 12, **characterized in that**, in the region of the bottom (26) of the receptacle (18), the support tube (22) surrounds a pressure tube (30) which is closed in the radial direction and is radially a distance away from the support tube (22).

## Revendications

1. Dispositif de filtre à huile (10, 100) comprenant un boîtier (12), qui présente un espace de logement (18) pour un élément filtrant (20) pouvant être inséré dans le boîtier (12) et pouvant être traversé radialement avec de l'huile, et un tuyau d'appui (22, 102) portant l'élément filtrant (20) lorsque l'élément filtrant (20) est inséré, lequel tuyau est inséré dans l'espace de logement (18) et fixé sur le boîtier (12) de telle sorte qu'il reste dans le boîtier (12) lors du remplacement de l'élément filtrant (20), **caractérisé en ce que**
le boîtier (12) présente des parties de fixation (36) disposées dans la zone du fond (26) de l'espace de logement, autour de l'axe longitudinal médian (41) de l'espace de logement (18) et/ou du tuyau d'appui (22, 102) et prévoyant des tenons de liaison (38, 112) et **en ce que** le côté, attribué au fond (26) de l'espace de logement (18), du tuyau d'appui (22, 102) présente des zones de fixation (22) correspondant aux tenons de liaison (38, 112) et prévoyant des évidements de tenon (40, 106), lesquelles zones sont réalisées sous la forme de pieds dépassant dans une direction tournée vers l'extérieur radialement ou sous forme de collerettes dépassant dans la direction tournée vers l'extérieur radialement et périphérique au moins par endroits.

2. Dispositif de filtre à huile (10, 100) selon la revendication 1, **caractérisé en ce que** le tuyau d'appui (22, 102) est encliqueté sur le boîtier (12), vissé et/ou fixé à la façon d'une baïonnette et/ou de façon inamovible.

3. Dispositif de filtre à huile (10, 100) selon la revendication 1 ou 2, **caractérisé en ce que** les tenons de liaison (38, 112) sont conçus comme tenons rivés, et en particulier sous forme de tenons rivés à chaud.

4. Dispositif de filtre à huile (10, 100) selon la revendication 1 ou 2, **caractérisé en ce que** les tenons de liaison (38, 112) sont conçus comme des tenons d'encliquetage.

5. Dispositif de filtre à huile (10, 100) selon la revendication 1 ou 2, **caractérisé en ce que** les parties de fixation présentent des filetages pour des vis de fixation traversant les zones de fixation.

6. Dispositif de filtre à huile (10, 100) selon la revendication 5, **caractérisé en ce que** les tenons de liaison présentent un filetage intérieur ou un filetage extérieur pour les vis de fixation.

7. Dispositif de filtre à huile (10, 100) selon l'une quelconque des revendications précédentes, **caractérisé en ce que** les parties de fixation (36) du boîtier sont conçues sous forme de nervures agencées dans la direction axiale et/ou la direction radiale, à chaque fois au moins un tenon de liaison (38, 112) étant disposé sur les côtés supérieurs, associés à l'élément filtrant, des nervures.

8. Dispositif de filtre à huile (100) selon au moins l'une quelconque des revendications précédentes, **caractérisé en ce que** les tenons de liaison (112) s'engagent dans les zones de fixation (104) de telle sorte que le tuyau d'appui (102) peut être déplacé d'une position de service occupée lorsque l'espace de logement (18) est fermé dans une position d'évacuation pouvant être occupée lorsque l'espace de logement (18) est ouvert dans la direction axiale, de l'huile pouvant s'échapper de l'espace de logement (18) dans la position d'évacuation.

9. Dispositif de filtre à huile (100) selon la revendication (8), **caractérisé en ce que** les tenons de liaison (112) présentent dans la zone de leurs extrémités libres un élargissement (114) en forme de champignon, la distance du fond (26) de l'espace de logement (18) à l'arête inférieure de l'élargissement (114) étant au moins légèrement plus grande que l'épaisseur, s'étendant dans la direction axiale, des zones de fixation (104).

10. Dispositif de filtre à huile (100) selon la revendication 8 ou 9, **caractérisé en ce qu'**un élément filtrant (116) sollicitant le tuyau d'appui (102) à partir du fond est prévu entre le fond (26) de l'espace de logement (18) et les zones de fixation.

11. Dispositif de filtre à huile (100) selon la revendication 8, 9 ou 10, **caractérisé en ce que** le tuyau d'appui (102) s'engage sur le côté opposé à l'élément filtrant (20) dans une évacuation d'huile (32) de telle sorte que, dans la position de service, aucune huile non filtrée ne peut s'introduire dans la sortie d'huile (32) par le tuyau d'appui et, dans la position d'évacuation, un évidement d'évacuation (118) prévu sur le tuyau d'appui (102) correspond avec l'espace de logement (18) et en particulier de l'huile non filtrée peut s'introduire par l'évidement d'évacuation (118) dans la sortie d'huile (32).

12. Elément de filtre à huile (100) selon au moins l'une quelconque des revendications 8 à 11, **caractérisé en ce que**, dans la position de service, de l'huile pure traversant l'élément filtrant (20) et filtrée s'écoule par la sortie d'huile (32) hors de l'espace de logement.

13. Dispositif de filtre à huile (10) selon l'une quelconque des revendications précédentes 1 à 12, **caractérisé en ce que** le tuyau d'appui (22) entoure dans la zone du fond (26) de l'espace de logement (18) un tuyau de retenue (30) fermé dans le sens radial et espacé radialement du tuyau d'appui (22).
